# EUROPÄISCHE PATENTANMELDUNG

(11) **EP 2 135 578 A1**
(43) Veröffentlichungstag der Anmeldung: **23.12.2009**
(21) Anmeldenummer: 09006148.2
(22) Anmeldetag: 06.05.2009
(51) Int. Cl.: A61C 5/06, G01F 11/24

(54) **Dental-Vorschub-Dosierung**

(30) Priorität: 16.06.2008 DE 102008028232
(71) Anmelder: Heraeus Kulzer GmbH, 63450 Hanau (DE)
(72) Erfinder: Winterhoff, Jörg, 63450 Hanau (DE)
(74) Vertreter: Kühn, Hans-Christian

(57) **Zusammenfassung**

Die Erfindung betrifft eine Dosiereinrichtung mit einer Aufnahme für eine mit Dentalkomposit befüllte Mischkanüle und Aufnahme für einen Auspresskolben, wobei die Dosiereinrichtung drei auf einer Achse befestigte Formteile aufweist, wobei ein erstes Formteil die Aufnahme für den Auspresskolben, eine Bohrung oder Durchführung zur Befestigung der Achse und eine Bohrung oder Durchführung zur Aufnahme von Komposit aufweist sowie ein Verfahren zum Dosieren von dentalem Komposit.

## Beschreibung

Die Erfindung betrifft eine Vorrichtung für den Einsatz im dentalen Bereich mit einer Aufnahmeeinrichtung für eine mit Dentalkomposit befüllte Mischkanüle, einer Aufnahme für einen Auspresskolben, eine Applikationskanüle sowie drei Reservoirs.

Um beispielsweise Implantataufbauten eines Implantatsystems sicher zu befestigen, werden diese verschraubt, oder wie in WO 01 /80767 A1, WO 01/80766 A1, WO 01/80769 A1 und WO 01/80768 A1 beschrieben, im Implantat zementiert. Dazu muss eine genau definierte Menge angemischten Zements appliziert werden. Es ist hierbei erforderlich, dass die Applikation des Zements absolut frei von Lufteinschlüssen erfolgt, da Luftblasen sowohl die Dosierung als auch die Festigkeit des aushärtenden Zements beeinflussen können.

Es ist bekannt, dass der mittels Mischkanülen angemischte Zement in Mehrfachdosiersysteme gegeben wird und mittels des Mehrfachdosiersystems der Zement appliziert werden kann. Die derzeit bekannten Systeme haben den Nachteil, dass sie aufwendig und kompliziert zu bedienen sind und es häufig zur Bildung von Luftblasen im Zement und dementsprechend zu Fehldosierungen kommt. Ferner erlauben die bisher bekannten Systeme nur vier Dosierungen mit einer Befüllung des Mehrfachdosiersystems.

Aufgabe der Erfindung ist es daher, eine Vorrichtung für den Einsatz im dentalen Bereich bereitzustellen, welche die oben genannten Nachteile vermeidet und eine blasenfreie Befüllung und Dosierung des Zementes bei der Fixierung von Implantataufbauten ermöglicht. Ferner soll es ermöglicht werden, dass bis zu 10 Dosiervorgänge mit einer Befüllung erfolgen können.

Diese Aufgabe wird bereits mit den Merkmalen des unabhängigen Anspruchs gelöst.

Vorteilhafte Weiterbildungen sind den jeweiligen Unteransprüchen zu entnehmen.
Die erfindungsgemäße Vorrichtung für den Einsatz im dentalen Bereich mit einer Aufnahmeeinrichtung für eine mit Dentalkomposit befüllten Mischkanüle sowie einer Aufnahme für einen Auspresskolben, wobei die Vorrichtung zumindest drei Formteile aufweist, sieht vor, dass die Formteile auf einer Achse angeordnet sind und zumindest ein Formteil drehbar um die Achse gelagert ist.

Die Erfindung sieht eine Dosiereinrichtung mit einer Aufnahme für eine mit Dentalkomposit gefüllten Mischkanüle und eine Aufnahme für einen Auspresskolben vor, wobei die Dosiereinrichtung drei auf einer Achse befestigte Formteile aufweist. Dabei umfasst das erste Formteil eine Aufnahme für den Auspresskolben, eine Bohrung oder auch eine Durchführung zur Befestigung der Achse und eine Durchführung zur Aufnahme von Komposit. Das zweite Formteil weist eine Durchführung für die Achse und eine dazu parallele exzentrische Durchführung zur Aufnahme des Komposits auf und das dritte Formteil eine Aufnahmeöffnung für das Komposit, eine Bohrung oder Durchführung für die Achse und eine Applikationskanüle zur Abgabe des Komposits.

Die Erfindung sieht vor, dass sich Formteil 2 so um seine Achse drehen lässt, dass die exzentrische Durchführung bündig mit der Reservoir- und Entlüftungsdurchführung in Formteil 3 und dem Reservoir in Formteil 1 ist oder bündig mit der Öffnung für den Kolben in Formteil 1 und der Auslassöffnung der Applikationskanüle in Formteil 3. Eine derartige Vorrichtung ermöglicht ein einfaches Ausbringen von Dentalkomposit ohne dass Lufteinschlüsse in dem Dentalkomposit sich befinden und eine Blasenbildung im Dentalkomposit stattfindet. Ferner ermöglicht die erfindungsgemäße Vorrichtung eine einfache und sichere Befüllung der Dosiereinrichtung.

Es hat sich gezeigt, dass es von Vorteil ist, wenn das mittlere Formteil mit planaren Flächen zwischen dem äußeren Formteil drehbar angeordnet ist.

Ferner ist es von Vorteil, wenn im Formteil 1 in der Aufnahme für den Kolben ein Kolben angeordnet ist, der mit seiner das Komposit ausstoßenden Stirnfläche bündig mit der dem Formteil 2 zugewandten Stirnfläche des Formteils 1 ist. Ferner ist es vorteilhaft, wenn das Formteil 1 eine Befestigungseinrichtung für eine Vorrichtung zur Kolbenbewegung aufweist.

Eine derartige Dosiereinrichtung verhindert Lufteinschlüsse und somit Mängel beim Ausbringen des Dentalkomposits.

Es hat sich gezeigt, dass es von Vorteil ist, wenn das Reservoir in Formteil 1 zu einer Entlüftungskapilliare verjüngt ist. Dadurch wird bei zuverlässiger Entlüftung ein unbeabsichtigtes Austreten überschüssigen Dentalkomposits auf die Dosiereinrichtung vermieden.

Hierbei ist es auch vorteilhaft, wenn die Einlassöffnung in Formteil 3 in ihrem äußeren Abschnitt um die Wandstärke der Applikationskanüle verbreitert ist. Dadurch ist ein einfaches Einbringen des Komposits in gleich bleibender Strangdicke in die Dosiereinrichtung möglich.

Um eine blasenfreie Befüllung mit Dentalkomposit zu erreichen, ist es ferner von Vorteil, wenn die inneren Querschnitte der Austrittsöffnung der Misch- und Befüllkanüle und der sich in deren eingestecktem Zustand daran anschließende Teil der Einlassöffnung des Formteils 3 und der als Reservoir fungierenden exzentrischen Durchführung des Formteils 2, sowie die Durchführung für den Kolben und des Kolbens in Formteil 1 gleich sind oder kleiner als die der aufgeführten Querschnitte, so dass eine Befüllung mit Dentalkomposit und die anschließende dosierte Austreibung ohne jegliche Richtungs- und Querschnittsänderung innerhalb der o.g. Lumina erfolgen kann. So wird bestmöglich ein Luftblaseneinschluss bei Befüll- und Auspressvorgang verhindert.

Durch eine derartige Dosiereinrichtung ist ebenfalls eine preisgünstige Mehrfachdosierung der Einrichtung bei gleicher Füllmenge möglich, da auf ein mehrfaches Vordosieren zur Austreibung von Lufteinschlüssen verzichtet werden kann

Ferner umfasst die Erfindung ein Verfahren zur Dosierung von dentalem Komposit, wobei das Komposit aus einer Befüllkanüle ohne Richtungs- und Querschnittsänderung einer Durchführung eines ersten Formkörpers der als Reservoir dienenden Durchführung eines zweiten Formkörpers zugeführt wird, die über ein entlüftetes Reservoir eines daran anschließenden dritten Formkörpers entlüftet wird und darauf der in der Durchführung des zweiten Formkörpers eingebrachte Kompositstrang durch Drehung dieses Formkörpers um seine Achse bündig vor einen Auspresskolben aus der Durchführung des ersten Formkörpers und auf der anderen Seite bündig vor die Austrittsöffnung der Applikationskanüle des dritten Formkörpers gebracht wird.
Durch die Drehung des Formteils 2 wird der Kompositstrang sauber ohne Lufteinschlüsse aus den Kompositüberschüssen in den Reservoirs der Formteile 1 und 3 abgeschnitten und in die vorausgehend beschriebene Ausbringposition vor den Kolben und die Austrittsöffnung der Applikationskanüle bewegt. Da bei der Drehung des mittleren Formteils kein Luftzutritt zu dem Komposit erfolgen darf, um Blasenbildung zu vermeiden, sind die zueinender gewandten Stirnflächen der Formteile plan zueinander und spaltfrei dicht montiert, so dass nur eine Rotation des mittleren Formteils bei dicht anliegenden Flächen, jedoch keinerlei Distraktion möglich ist. Das Verfahren des Befüllens der erfindungsgemäßen Einrichtung ohne Richtungs- und Querschnittsänderung, sowie des luftfreien Einrotierens des Komposits in die Ausbringposition ermöglicht ein luftfreies Dosieren in stets gleicher Menge von Dentalkomposit ohne dass Lufteinschlüsse im Dentalkomposit entstehen können.

Das Verfahren eignet sich besonders vorteilhaft zum Dosieren von ca. 1 bis 100 mg dentalem Komposit, wobei das dentale Kompositmaterial aus einem Vorratsbehälter durch eine Kanüle in einer Öffnung an einem Formteil in eine Durchführung eines zweiten Formteils gepresst wird, bis das Komposit aus der Durchführung in ein Reservoir eines dritten Formteils eintritt und hierauf das mittlere Formteil auf einer Achse gegen die äußeren Formteile gedreht wird, bis die Durchführung des mittleren Formteils mit einer Kolbenöffnung und der Austrittsöffnung einer Kanüle bündig ist, worauf das Komposit mit einem Kolben aus der Durchführung durch die Kanüle gepresst wird. Vorteilhafterweise wird dabei das Komposit blasenfrei durch die Kanüle gepresst.

Die Erfindung wird nachfolgend anhand einer bevorzugten Ausführungsform und unter Bezugnahme der beigefügten Figuren näher erläutert.

Die Erfindung wird nachfolgend anhand bevorzugter Ausführungsbeispiele näher erläutert.
Figur 1 zeigt die erfindungsgemäße Vorrichtung im Befüllungszustand (mit aufgesteckter Befüllungs- bzw. Mischkanüle) im Querschnitt;
Figur 2 zeigt die erfindungsgemäße Vorrichtung nach Befüllung und Abziehen der Zementmischkanüle im Querschnitt;
Figur 3 zeigt die erfindungsgemäße Vorrichtung im Betriebszustand zu Beginn des Dosierungsvorgangs im Querschnitt;
Figur 4 zeigt die erfindungsgemäße Vorrichtung im Betriebszustand nach erfolgter Teildosierung im Querschnitt.

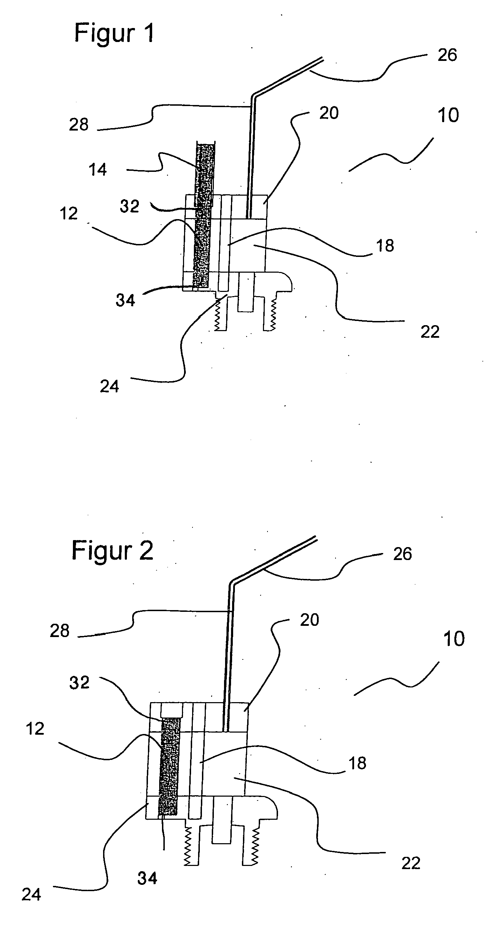

In Figur 1 ist die erfindungsgemäße Vorrichtung 10 in ihrem Querschnitt abgebildet. In die erfindungsgemäße Vorrichtung 1 kann eine Mischkanüle 14 eingebracht werden. Die erfindungsgemäße Vorrichtung 10, welche aus den drei Formteilen 20, 22, 24 besteht, die in einer bestimmten definierten Position rotationssicher zueinander auf der Achse 18 angebracht sind, kann somit durch eine Mischkanüle 14 mit Dentalkomposit innerhalb einer Aufnahme 12 gefüllt werden. Im Ausgangszustand ist das Formteil 22 gegenüber den Formteilen 20 und 24 durch en leichtes Einschnappen gesichert und kann sich nicht unbeabsichtigt bewegen. Die Formteile 20 und 24 sind fest auf der Achse montiert und lassen sich nicht bewegen. Dadurch kann das Dentalkomposit ohne Richtungsänderung und ohne Durchmesseränderung, sowie ohne Passage von Unter- oder Hinterschnitten in das mittlere Formteil 22 eingebracht werden.

Anschließend wird wie in Figur 2 dargestellt, die Mischkanüle 14 abgenommen. Das Dentalkomposit befindet sich nun in der Aufnahme 12 der erfindungsgemäßen Dosiereinrichtung 10 innerhalb des mittleren Formteils 22 sowie in den (Überschuß)-reservoirs 32 und 34 der Formteile 20 und 24. Das mittlere Formteil 22 ist dabei beweglich auf der Achse 18 angeordnet und kann auf dieser um 360 °C gedreht werden.

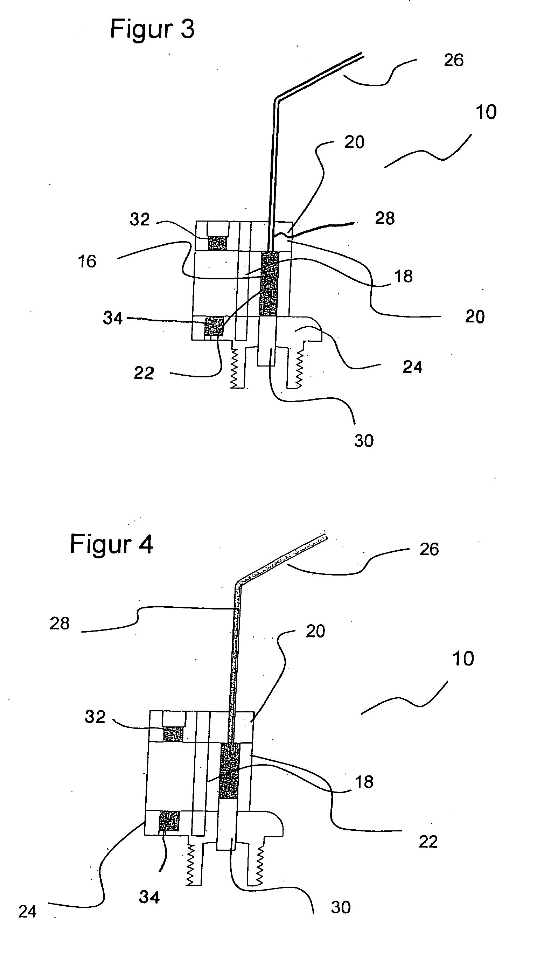

In Figur 3 ist die Lage des mittleren Formteils 22 nach seiner Rotation um 180°C um die Achse 18 dargestellt. Diese Position wird ebenfalls durch ein leichtes Einschnappen gesichert. Das Dentalkomposit befindet sich nun in einer Lage, bei der es durch Drücken des Stößels 30 durch die Durchführung 28 der Applikationskanüle 26 hinausbefördert werden kann. Dies ist in Figur 4 dargestellt. Durch Drücken des Stößels 30 wird das sich im mittleren Formteil 22 befindende Dentalkomposit durch das Formteil 20 gedrückt und gelangt in die Durchführung 28 der Applikationskanüle 26.

### Bezugzeichenliste

- Dosiereinrichtung: 10
- Aufnahme: 12
- Mischkanüle: 14
- Achse: 18
- Formteil 1: 20
- Formteil 2: 22
- Formteil 3: 24
- Applikationskanüle: 26
- Durchführung: 28
- Stößel/Auspresskolben: 30
- Überschussreservoir: 32
- Überschussreservoir: 34

## Patentansprüche

1. Dosiereinrichtung mit einer Aufnahme für eine mit Dentalkomposit befüllte Mischkanüle und Aufnahme für einen Auspresskolben, wobei die Dosiereinrichtung drei auf einer Achse befestigte Formteile aufweist, wobei ein erstes Formteil die Aufnahme für den Auspresskolben, eine Bohrung oder Durchführung zur Befestigung der Achse und eine Bohrung oder Durchführung zur Aufnahme von Komposit aufweist;
das Formteil 2 eine Durchführung für die Achse und eine exzentrische Durchführung zur Aufnahme von Komposit aufweist und
das Formteil 3 eine Aufnahmeöffnung oder Durchführung für das Komposit, eine Bohrung oder Durchführung für die Achse und eine Kanüle zur Abgabe des Komposits aufweist;
wobei sich Formteil 2 so um seine Achse drehen lässt, dass die exzentrische Durchführung bündig mit der Einlassöffnung in Formteil 3 und dem Reservoir in Formteil 1 ist oder bündig mit der Öffnung für den Kolben in Formteil 1 und der Auslassöffnung in Formteil 3 ist.

2. Dosiereinrichtung nach Anspruch 1, **dadurch gekennzeichnet, dass** das mittlere Formteil mit planaren Flächen zwischen den äußeren Formteilen drehbar angeordnet ist.

3. Dosiereinrichtung nach Anspruch 1 oder 2, **dadurch gekennzeichnet, dass** im Formteil 1 in der Aufnahme für den Kolben ein Kolben angeordnet ist.

4. Dosiereinrichtung nach einem der Ansprüche 1 bis 3, **dadurch gekennzeichnet, dass** das Formteil 1 eine Befestigungseinrichtung für eine Einrichtung zur Kolbenbewegung aufweist.

5. Dosiereinrichtung nach einem der Ansprüche 1 bis 4, **dadurch gekennzeichnet, dass** das Reservoir im Formteil 1 zu einer Entlüftungskapillare verjüngt ist.

6. Dosiereinrichtung nach einem der vorhergehenden Ansprüche, **dadurch gekennzeichnet, dass** die Achsenführung und die exzentrische Bohrung oder Durchführung in Formteil 2 parallel zueinander angeordnet sind.

7. Dosiereinrichtung nach einem der vorhergehenden Ansprüche, **dadurch gekennzeichnet, dass** die Einlassöffnung im Formteil 3 in ihrem äußeren Abschnitt um die Wandstärke der Befüllungskanüle und/oder Mischkanüle verbreitert ist.

8. Dosiereinrichtung nach einem der vorhergehenden Ansprüche, **dadurch gekennzeichnet, dass** die inneren Querschnitte der Befüllkanüle, der Einlassdurchführung des Formteils 3 auf der Innenseite, der exzentrischen Durchführung in Formteil 2, der Aufnahmeöffnung des Kolbens in Formteil 1 den gleichen Durchmesser aufweisen.

9. Verwendung einer Dosiereinrichtung nach einem der vorhergehenden Ansprüche zur blasenfreien Applikation von Komposit.

10. Verfahren zur Dosierung von dentalem Komposit insbesondere mit einer Einrichtung nach Anspruch 8, **dadurch gekennzeichnet, dass** das Komposit aus einer Befüllkanüle über eine Durchführung eines ersten Formkörpers der Durchführung eines zweiten Formkörpers zugeführt wird, die über ein entlüftetes Reservoir eines daran anschließenden Formkörpers entlüftet wird, und darauf der mittlere Formkörper gedreht wird und das in seiner Durchführung eingebrachte Kompositmaterial mit einem Kolben aus der Durchführung in eine Kanüle gepresst wird, **dadurch gekennzeichnet, dass** das Komposit von der Einlasskanüle bis zur Auslasskanüle ausschließlich in Richtung einer Achse oder parallel dazu bewegt wird oder mit konstantem Durchmesser bewegt wird.

11. Verfahren zum Dosieren von 1 bis 100 mg dentalem Kompositmaterial, **dadurch gekennzeichnet, dass** das dentale Kompositmaterial aus einem Vorratsbehälter durch eine Anmisch- oder Befüllkanüle in eine Öffnung eines Formteils in eine Durchführung eines zweiten Formteils gepresst wird, bis das Komposit aus der Durchführung in ein Reservoir eines weiteren Formteils eintritt und hierauf das mittlere Formteil auf einer Achse gegen die äußeren Formteile gedreht wird, bis die Durchführung des mittleren Formteils mit einer Kolbenöffnung bzw. der Stirnfläche des Kolbens und einer Kanüle bündig ist, worauf das Komposit mit einem Kolben aus der Durchführung durch die Kanüle gepresst wird.

12. Verfahren nach Anspruch 10, **dadurch gekennzeichnet, dass** das Komposit blasenfrei durch die Kanüle gepresst wird.

13. Verfahren nach Anspruch 10 oder 11, **dadurch gekennzeichnet, dass** das Komposit in reproduzierbarer Menge durch die Kanüle gepresst wird.

14. Verfahren zur Herstellung einer Dosiereinrichtung für dentale Komposite, **dadurch gekennzeichnet, dass** drei Formteile drehbar zueinander angeordnet werden, von denen ein Formteil ein entlüftetes Reservoir und einen Kolben aufweist und das andere Formteil eine Durchführung, die durch parallele Verschiebung sowohl mit dem Reservoir, als auch mit dem Kolben zum Fluchten gebracht werden kann sowie ein drittes Formteil, dessen Einlassöffnung und Auslassöffnung in diesen Positionen ebenfalls damit fluchten.
